# FASCICULE DE BREVET EUROPEEN

(11) **EP 0 477 064 B1**
(45) Date de publication et mention de la délivrance du brevet: **13.07.1994**
(21) Numéro de dépôt: 91402394.0
(22) Date de dépôt: 09.09.1991
(51) Int. Cl.: A01G 9/10

(54) **Dispositif pour supporter des pots de fleurs à distance variable les uns des autres**
Halterungsvorrichtung mit regulierbaren Abständen für Pflanzentöpfe
Support device for plant pots with variable distance between them

(30) Priorité: 12.09.1990 FR 9011290
(43) Date de publication de la demande: 25.03.1992
(73) Titulaire: Benoist, Alain, F-77515 Faremoutiers (FR)
(72) Inventeur: Benoist, Alain, F-77515 Faremoutiers (FR)
(74) Mandataire: Hasenrader, Hubert

(56) Documents cités:
- FR-A- 1 585 617
- GB-A- 1 033 152

## Description

La présente invention concerne un dispositif pour supporter une pluralité de pots de fleurs et pour permettre d'écarter lesdits pots de fleurs les uns des autres, à la demande, en fonction de la croissance des fleurs.

Ce dispositif est plus particulièrement destiné à des exploitations horticoles. Dans les exploitations horticoles, les pots de fleurs, dans lesquels des plantes sont semées ou des boutures repiquées, sont étroitement serrés les uns contre les autres sur les bords des serres, en vue de réduire l'encombrement. Lorsque les plantes poussent, elles doivent toutefois être séparées les unes des autres, proportionnellement à la place que nécessite chaque plante, c'est-à-dire proportionnellement à leur taille.

Le brevet français n° 1 585 617 dévoile un dispositif permettant de supporter une pluralité de pots de fleurs et de les écarter les uns des autres. Dans ce dispositif les pots de fleurs sont portés par des organes de réception et ceux-ci sont reliés entre eux par des bras articulés autour d'axes verticaux. Pour rassembler les pots, il faut tourner tout les organes de réception du dispositif en même temps chacun dans un sens prédéterminé, et pour les écarter, il faut tourner chaque organe de réception de pot dans le sens contraire. Ce dispositif, du fait de sa conception, est fragile et d'un maniement complexe, chaque organe de réception étant supporté par quatre bras articulés sur les bras des organes de réception voisins. L'ensemble du dispositif est ainsi soumis à des flexions par suite du poids des pots de fleurs placés dans les organes de réception.

Le but de la présente invention est de proposer un dispositif qui soit d'un maniement simple et dans lequel les organes de réception des pots de fleurs sont solidement liés entre eux.

Le but est atteint selon l'invention par le fait que le dispositif pour supporter les pots de fleurs à une distance variable les uns des autres du type comportant une pluralité d'organes des réception disposés dans un même plan horizontal, chacun desdits organes de réception pouvant supporter et recevoir un pot de fleurs, est caractérisé en ce que lesdits organes de réception sont portés par au moins deux poutrelles parallèles reliées entre elles par au moins deux coulisses de manière à définir une voie de largeur variable entre deux poutrelles voisines, chaque organe de réception étant solidaire d'une seule poutrelle et lesdits organes de réception étant régulièrement répartis sur lesdites poutrelles.

Grâce à cette structure chaque poutrelle porte un nombre prédéterminé d'organes de réception de pots de fleurs et ces organes de réception se déplacent en même temps par translation à la suite de l'écartement de l'une des poutrelles par rapport à la poutrelle voisine. Les poutrelles sont évidemment disposées sur des supports permettant leur écartement. Il est à remarquer que l'on peut déplacer une seule poutrelle à la fois alors que dans le dispositif dévoilé dans FR A 1 585 617, il faut faire pivoter tout les organes de réception en même temps.

De façon avantageuse les organes de réception solidaires de chacune desdites poutrelles sont disposés alternativement de part et d'autre de ladite poutrelle le long de celle-ci ; et les organes de réception situés dans une voie séparant deux poutrelles voisines sont alternativement solidaires de l'une ou l'autre desdites poutrelles le long de ladite voie.

Ainsi le poids supporté par chaque poutrelle est équilibré dans l'axe de la poutrelle évitant ainsi des flexions dans les organes de coulissement.

De préférence les organes de réception sont disposés sur lesdites poutrelles de telle manière que les organes de réception situés dans une voie puissent être alignés lorsque les poutrelles voisines définissant ladite voie sont rapprochées au maximum l'une de l'autre.

Avantageusement les coulisses sont munies de moyens permettant de limiter la largeur maximum desdites voies.

Avantageusement la largeur maximum des voies est sensiblement égale au double de la largeur minimum des voies.

De préférence les poutrelles sont formées par des profilés en T présentant une âme verticale et une aile supérieure horizontale, et l'aile supérieure est disposée dans le plan des organes de support.

Grâce à cette structure les organes de réception sont disposés côte à côte lorsque les poutrelles sont rapprochées les unes des autres. La quantité de plantes par unité de surface est divisée par deux lorsque l'on écarte les poutrelles au maximum. Le dispositif peut se présenter sous la forme d'un module ayant une taille raisonnable, permettant sa manipulation par un homme seul. Les divers modules peuvent alors être disposés côte à côte comme s'il s'agissait d'un dispositif de très grande dimension.

D'autres avantages et caractéristiques ressortiront à la lecture de la description suivante faite à titre d'exemple et en référence au dessin annexé dans lequel :
- la figure 1 montre une vue en perspective du dispositif de l'invention dans lequel les organes de réception sont côte à côte.
- la figure 2 montre une vue en perspective de la figure 1 dans lequel les organes de réception sont écartés les uns des autres.
- la figure 3 est une coupe transversale selon la ligne III III de la figure 1, et
- la figure 4 est une coupe transversale selon la ligne IV IV de la figure 2.

La référence 1 représente un dispositif de l'invention qui permet de supporter une pluralité de pots de fleurs à distance variable l'un de l'autre. Chaque pots de fleurs, qui peut être avantageusement un pot en plastique de forme tronconique, est posé dans un organe de réception 2 constitué d'un cadre rectangulaire. La taille et la forme dudit cadre sont adaptés au type de pot de fleurs.

Comme on le voit sur le dessin, le dispositif 1 comporte trois poutrelles 3a, 3b, 3c parallèles. Les poutrelles voisines sont reliées entre elles par au moins deux coulisses 4a, 4b disposées de préférence près des extrémités desdites poutrelles et de manière à pouvoir écarter ou rapprocher deux poutrelles voisines. Chaque poutrelle supporte un nombre prédéterminé d'organes de réception qui sont disposés le long de ladite poutrelle alternativement d'un côté ou de l'autre de celle-ci. Les organes de réception situés dans une voie 5 délimitée par deux poutrelles voisines, par exemple 3a et 3b, sont solidaires alternativement de la poutrelle 3a et de la poutrelle 3b le long de cette voie 5.

Le dispositif 1 montré sur le dessin peut ainsi supporter 18 pots de fleurs, chaque poutrelle étant munie de trois organes de réception 2 sur chacun de ses côtés.

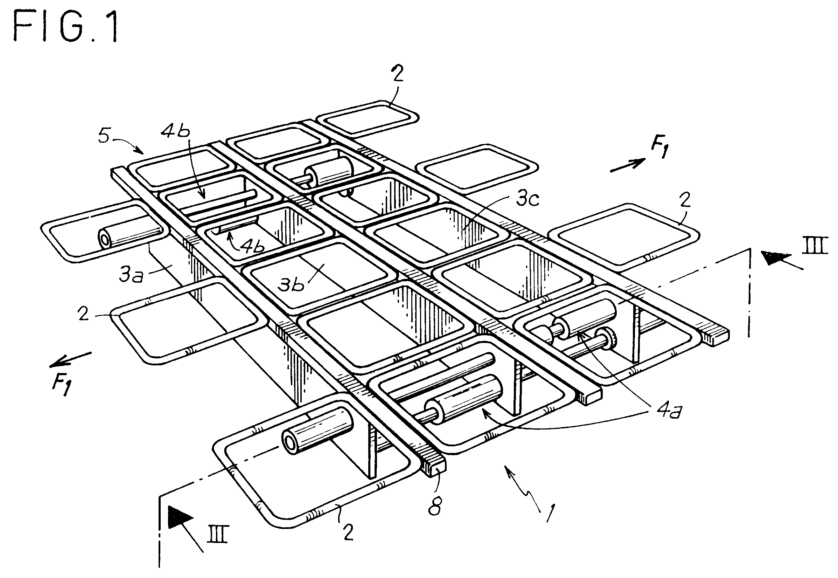

De préférence, lorsque les poutrelles 3a, 3b et 3c sont rapprochées au maximum les unes des autres, les organes de réception situés dans une voie 5 sont alignés et les organes de réception 2 du dispositif 1 sont alors dispoés côte à côte, comme on le voit sur la figure 1 à la manière d'un damier, en rangs et colonnes. De préférence les coulisses 4a et 4b sont disposées entre deux rangs transversaux.

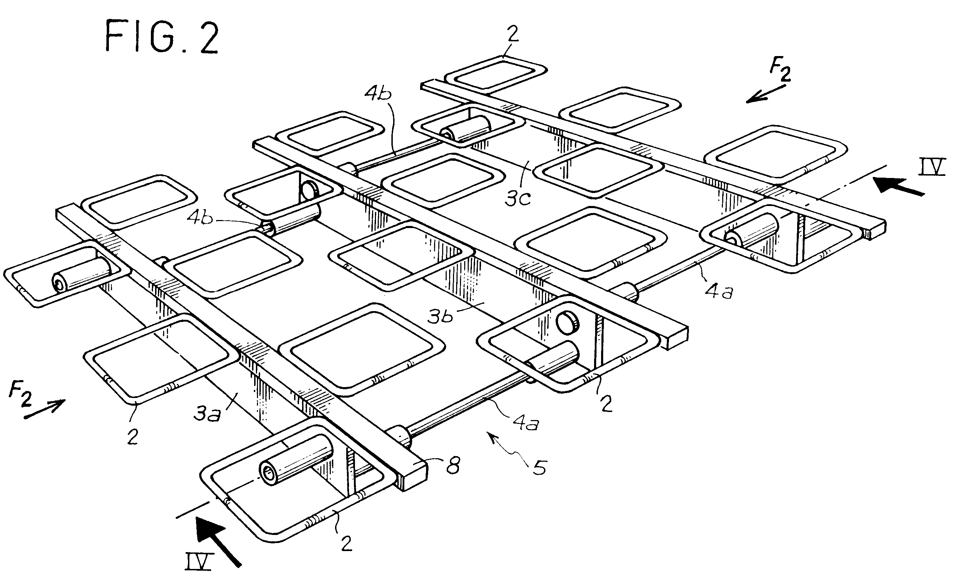

Lorsqu'on écarte les poutrelles en exerçant sur elles une force manuelle ou mécanique représentée par la flèche F1 sur la figure 1, la surface du dispositif augmente comme on le voit sur la figure 2 et les organes de réception 2 sont alors écartés les uns des autres.

De préférence les coulisses 4a et 4b sont munies de moyens 6 permettant de limiter l'écartement de deux poutrelles voisines. Cet écartement maximum est de préférence sensiblement égal au double de la largeur minimum de la voie 5, ce qui permet de diviser par deux la densité des pots de fleurs par unité de surface.

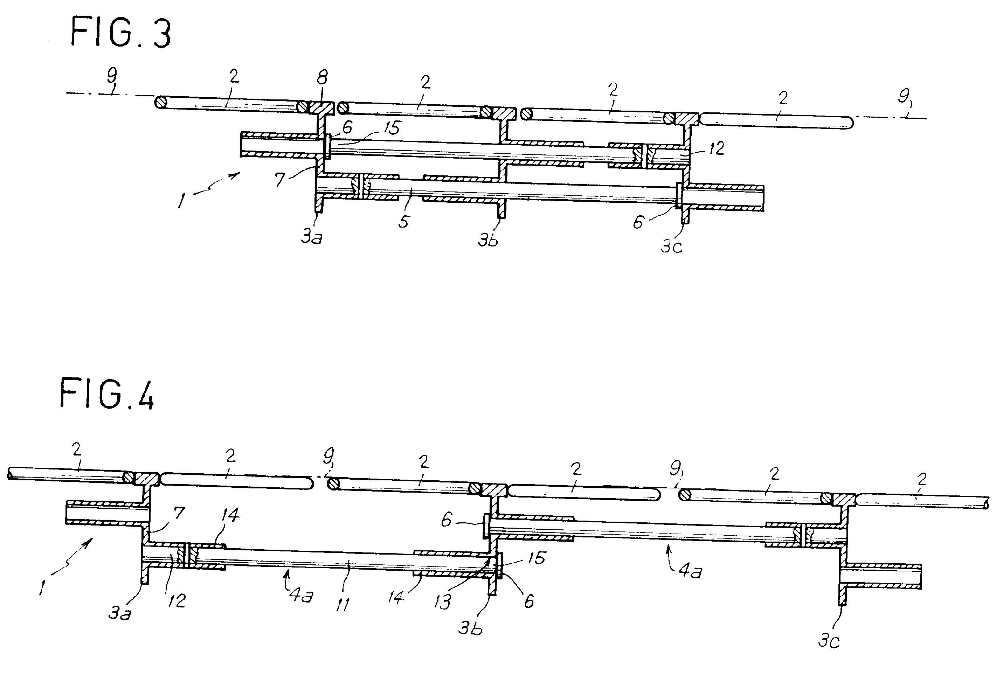

Comme on le voit plus clairement sur les figures 3 et 4, les poutrelles 3a, 3b et 3csont formées par des profilés en T présentant une âme verticale 7 et une aile supérieure horizontale 8 sur laquelle sont montés à l'horizontale des organes de réception 2. Les organes de réception 2 du dispositif 1 se trouvent ainsi dans un même plan horizontal 9 qui se confond avec la face supérieure du dispositif 1.

Les coulisses 4a et 4b reliant deux poutrelles voisines, 3a et 3b par exemple, sont constituées chacune d'une tige 11 fixée, par son extrémité 12, perpendiculairement sur l'âme 7 de la première poutrelle 3a, ladite tige 11 coulissant dans un alèsage 13 prévu en correspondante dans l'âme 7 de la deuxième poutrelle 3b.

De préférence des manchons de coulissement 14 sont fixés sur les âmes 7 des poutrelles 3a et 3b, de manière à assurer le parallèlisme des poutrelles 3a et 3b. Les moyens 6 permettant de limiter l'écartement des deux poutrelles 3a et 3b sont réalisés sous la forme d'un arrêtoir fixé à l'extrémité libre 15 et susceptible de coopérer avec l'âme 7 de la poutrelle 3b. La longueur d'une tige est sensiblement égale au double de la largeur d'un organe de réception 2.

Dans la description faite ci-dessus à titre d'exemple, il a été mentionné que le dispositif comporte trois poutrelles 3a, 3b et 3c. Il est évident qu'il doit comporter au moins deux poutrelles et qu'il n'y a théoriquement pas de limite pour le nombre maximum. Le nombre d'organes de réception 2 de pots de fleurs montés sur une poutrelle peut être également différent de six. Il est également manifeste que le dispositif 1 décrit ci-dessus peut être considéré comme un module de base manipulable par un ouvrier et qui repose sur des tables ou des supports quelconques ; le dispositif est alors formé d'un ensemble de modules disposés côte à côte que l'on peut manipuler individuellement.

Les constituants du dispositif 1 peuvent être réalisés soit en métal, soit dans une matière plastique rigide.

La manipulation du dispositif se comprend aisément. Pour écarter les plantes on exerce une force d'écartement représentée par la flèche F1 sur la figure 1 et pour rapprocher les plantes on exerce une force représentée par la flèche F2 sur la figure 2.

## Revendications

1. Dispositif pour supporter des pots de fleurs à une distance variable les uns des autres, du type comportant une pluralité d'organes de reception (2) disposés dans un même plan horizontal (9), chacun des dits organes de reception pouvant recevoir et supporter un pot de fleurs, caractérisé en ce que lesdits organes de reception (2) sont portés par au moins deux poutrelles parallèles (3a, 3b) reliées entre elles par au moins deux coulisses (4a, 4b) de manière à définir une voie (5) de largeur variable entre deux poutrelles voisines (3a, 3b), chaque organe de reception (2) étant solidaire d'une seule poutrelle (3a, 3b) et lesdits organes de reception étant régulièrement répartis sur lesdites poutrelles (3a, 3b).

2. Dispositif selon la revendication 1 caractérisé en ce que les organes de réception (2) solidaires de chacune desdites poutrelles (3a, 3b) sont disposées alternativement de part et d'autre desdites poutrelles (3a, 3b) le long de celles-ci ; et en ce que les organes de réception (2) situés dans une voie (5) séparant deux poutrelles voisines (3a, 3b) sont alternativement solidaires de l'une ou de l'autre desdites poutrelles (3a, 3b) le long de ladite voie (5).

3. Dispositif selon la revendication 2 caractérisé en ce que les organes de réception (2) sont disposés sur lesdites poutrelles (3a, 3b) de telle manière que les organes de réception (2) situés dans une voie (5) puissent être alignés lorsque les poutrelles (3a, 3b) voisines définissant ladite voie (5) sont rapprochées au maximum l'une de l'autre.

4. Dispositif selon l'une quelconque des revendications 1 à 3 caractérisé en ce que les coulisses (4a, 4b) sont munies de moyens (6) permettant de limiter la largeur maximum desdites voies (5).

5. Dispositif selon la revendication 4 caractérisé en ce que la largeur maximum des voies (5) est sensiblement égale au double de la largeur minimum desdites voies (5).

6. dispositif selon l'une quelconque des revendications 1 à 5 caractérisé en ce que les poutrelles (3a, 3b, 3c) sont formés par des profilés en T présentant une âme verticale (7) et une aile supérieure (8) horizontale ; et en ce que l'aile supérieure (8) est disposée dans le plan (9) des organes de support (2).

7. Dispositif selon la revendication 6 caractérisé en ce que les coulisses (4a, 4b) reliant deux poutrelles voisines (3a, 3b) comportent chacune une tige (11) fixée par l'une de ses extrémités (12) perpendiculairement sur l'âme (7) de l'une desdites poutrelles (3a), ladite tige (11) coulissant dans un alésage (13) prévu en correspondance dans l'âme (7) de l'autre desdites poutrelles (3b).

8. Dispositif selon la revendication 7 caractérisé en ce que l'extrémité libre (15) de ladite tige (11) est munie d'un arrêtoir de tige (6) susceptible de coopérer avec l'âme (7) de l'autre desdites poutrelles (3b) pour limiter l'écartement desdites deux poutrelles voisines (3a, 3b).

## Patentansprüche

1. Halterungsvorrichtung mit einstellbaren Abständen für Pflanzentöpfe, die eine Vielzahl von in einer gemeinsamen waagerechten Ebene (9) angeordneten Aufnahmen (2) umfaßt, von denen jede einen Pflanzentopf aufnehmen und halten kann,
dadurch **gekennzeichnet**, daß die Aufnahmen (2) von mindestens zwei parallelen Trägern (3a, 3b) getragen werden, die miteinander durch mindestens zwei Schiebeführungen (4a, 4b) so befestigt sind, daß eine Bahn (5) einstellbarer Breite zwischen zwei benachbarten Trägern (3a, 3b) festgelegt wird, wobei jede Aufnahme (2) an einem einzigen Träger (3a, 3b) befestigt ist und die Aufnahmen gleichmäßig auf den Trägern (3a, 3b) verteilt sind.

2. Vorrichtung nach Anspruch 1,
dadurch **gekennzeichnet**, daß die an je einem der Träger (3a, 3b) befestigten Aufnahmen (2) abwechselnd auf je einer Seite entlang der Träger (3a, 3b) angeordnet sind, und dadurch, daß die in einer zwei benachbarte Träger (3a, 3b) trennenden Bahn (5) gelegenen Aufnahmen (2), entlang dieser Bahn (5) abwechselnd an dem einen oder dem anderen der Träger (3a, 3b) befestigt sind.

3. Vorrichtung nach Anspruch 2,
dadurch **gekennzeichnet**, daß die Aufnahmen (2) auf den Trägern (3a, 3b) so angeordnet sind, daß die in einer Bahn (5) gelegenen Aufnahmen (2) fluchtend ausgerichtet werden, wenn die benachbarten Träger (3a, 3b), die die Bahn (5) festlegen, auf ein Höchstmaß zusammengeschoben sind.

4. Vorrichtung nach einem der Ansprüche 1 bis 3,
dadurch **gekennzeichnet**, daß die Schiebeführungen (4a, 4b) mit Einrichtungen (6) ausgestattet sind, die es ermöglichen, die maximale Breite der Bahnen (5) zu begrenzen.

5. Vorrichtung nach Anspruch 4,
dadurch **gekennzeichnet**, daß die maximale Breite der Bahnen (5) im wesentlichen gleich der doppelten minimalen Breite dieser Bahnen (5) ist.

6. Vorrichtung nach einem der Ansprüche 1 bis 5,
dadurch **gekennzeichnet**, daß die Träger (3a, 3b, 3c) aus T-Profilen gebildet sind, die einen senkrechten Steg (7) und einen oberen waagrechten Flansch (8) aufweisen, und dadurch, daß der obere Flansch (8) in der Ebene (9) der Aufnahmen (2) liegt.

7. Vorrichtung nach Anspruch 6,
dadurch **gekennzeichnet**, daß jede der Schiebeführungen (4a, 4b), die zwei benachbarte Träger (3a, 3b) verbinden, einen Stab (11) aufweist, der an einem Ende (12) lotrecht auf dem Steg (7) des einen Trägers (3a) befestigt ist, und der Stab (11) in einer Bohrung (13) gleitet, die korrespondierend im Steg (7) des anderen Trägers (3b) angebracht ist.

8. Vorrichtung nach Anspruch 7,
dadurch **gekennzeichnet**, daß das freie Ende (15) des Stabs (11) mit einem Anschlag (6) für den Stab versehen ist, der dazu geeignet ist, mit dem Steg (7) des anderen Trägers (3b) zusammenzuwirken, um den Abstand der beiden benachbarten Träger (3a, 3b) zu begrenzen.

## Claims

1. Device for supporting flower-pots at a variable distance from one another, of the type comprising a plurality of receiving members (2) disposed inside the same horizontal plane (9), each of said receiving members being able to receive and support a flower-pot, characterized in that said receiving members (2) are carried by at least two parallel beams (3a, 3b) joined together by at least two slides (4a, 4b) in such a way as to define a track (5) of variable width between two adjacent beams (3a, 3b), each receiving member (2) being fast with only one beam (3a, 3b) and said receiving members being regularly distributed on said beams (3a, 3b).

2. Device according to claim 1, characterized in that the receiving members (2) fast with each one of said beams (3a, 3b) are disposed in alternate fashion on either side of said beams (3a, 3b) along thereof; and in that the receiving members (2) situated in one track (5) separating two adjacent beams (3a, 3b) are alternately fast with either one of said beams (3a, 3b) along said track (5).

3. Device according to claim 2, characterized in that the receiving members (2) are disposed on said beams (3a, 3b) in such a way that the receiving member (2) situated in one track (5) can be aligned when the adjacent beams (3a, 3b) defining said track (5) are as close together as they can be.

4. Device according to any one of claims 1 to 3, characterized in that said slides (4a, 4b) are equipped with means (6) for limiting the maximum width of said tracks (5).

5. Device according to claim 4, characterized in that the maximum width of the tracks (5) is substantially equal to twice the minimum width of said tracks (5).

6. Device according to any one of claims 1 to 5, characterized in that the beams (3a, 3b, 3c) are formed by T-sections having a vertical web (7) and a horizontal upper flange (8); in that the upper flange (8) is disposed in the plane (9) containing the support members (2).

7. Device according to claim 6, characterized in that each one of the slides (4a, 4b) joining two adjacent beams (3a, 3b) comprises a rod (11) fixed perpendicularly by one of its ends (12) on the web (7) of one of said beams (3a), said rod (11) sliding in a bore (13) correspondingly provided in the web (7) of the other beam (3b).

8. Device according to claim 7, characterized in that the free end (15) of said rod (11) is provided with a rod abutting member (6) adapted to co-operate with the web (7) of the other of said beams (3b) to limit the distance between two adjacent beams (3a, 3b).
